# EUROPEAN PATENT SPECIFICATION

(11) **EP 4 206 112 B1**
(45) Date of publication and mention of the grant of the patent: **17.12.2025**
(21) Application number: 22192900.3
(22) Date of filing: 30.08.2022
(51) Int. Cl.: B66C 1/02

(54) **INTEGRATED VACUUM SUCTION PAD**
INTEGRIERTES VAKUUMSAUGKISSEN
TAMPON D'ASPIRATION SOUS VIDE INTÉGRÉ

(30) Priority: 31.12.2021 CN 202111664032
(43) Date of publication of application: 05.07.2023
(73) Proprietor: Zhejiang Dingli Machinery Co., LTD., Leidian Town Deqing, Zhejiang 313219 (CN)
(72) Inventor: Zhong, Xu, Huzhou, 313219 (CN); Shugen, Xu, Huzhou, 313219 (CN)
(74) Representative: Garavelli, Paolo

(56) References cited:
- CN-A- 110 722 590
- JP-U- H 068 375
- US-A- 4 925 225

## Description

### TECHNICAL FIELD

The invention relates to the technical field of suction equipment, in particular to an integrated vacuum suction pad.

### BACKGROUND ART

With continuous development of a building technology, now a large area of curtain wall structures can be constructed on surfaces or internal of a building to enhance the aesthetic effect of the building. Curtain walls are generally composed of a plurality of large building materials jointly; corresponding high-altitude installation equipment is required in order to install these building materials at a specified position, and such high-altitude installation equipment mostly adopts pads to adsorb and grab the building materials.

A vehicle-mounted mobile elevating work platform for glass installation, with an application number of 202022152195.5 and disclosed by China National Intellectual Property Administration, comprises a vehicle-mounted mobile platform chassis, a rotating base, lifting arms and a glass adsorption rack, and is characterized in that the vehicle-mounted mobile elevating work platform for glass installation further comprises a coarse adjustment mechanism, a fine adjustment mechanism and a middle adjusting arm connected between the coarse adjustment mechanism and the fine adjustment mechanism; and the coarse adjustment mechanism is connected with the lifting arms at the same time, and the fine adjustment mechanism is connected with the glass adsorption rack at the same time. Although a technical solution of the patent provides the high-altitude installation equipment, in the technical solution of the patent, adsorption equipment is composed of a plurality of pads jointly, while adsorption actions of these pads are controlled by a vacuum pump in a unified mode. Consequently, if the vacuum pump or related components are damaged, the whole adsorption equipment will be failed; and if the adsorption equipment malfunctions in operation, dangerous accidents easily occur. Meanwhile, in case of damage, the whole adsorption equipment can only be replaced, and therefore a maintenance cost is increased greatly.

The relevant prior art comprises US 4 925 225 A(DOST JAMES A), CN 110 722 590 A (NANJING GEEK ROBOT CO., LTD) and JP H06 8375 U1.

### SUMMARY

The invention makes improvements to the above technical problems, namely that the technical solution provided by the invention is an integrated vacuum suction pad. The invention is set out in the appended set of claims.

### Beneficial effects:

The plurality of the pads of the invention are installed on the high altitude installation equipment; as each pad is capable of adsorbing and releasing the building material independently, in practical use of the high-altitude installation equipment, if some of the pads are damaged, the building material will not be released instantaneously; and meanwhile, the damaged pad can be maintained and replaced independently, so that the maintenance cost is reduced effectively, and the maintenance process is simplified;

By using the control valve, when the pad needs to be separated from the building material, reverse inflation for the pad is not required, and therefore the time required for state switching is saved effectively; and on one hand, the working efficiency is improved effectively, and on the other hand, the control is more sensitive;

A negative pressure state between the adsorption part and the building material can be kept for a certain time by the vacuum tank, on one hand, after the negative pressure in the vacuum tank reaches a certain value, the vacuum pump can be shut off, so as to shorten the working time of the vacuum pump, prolong the service life of the vacuum pump and reduce the probability that the vacuum pump malfunctions to further improve the safety of the pad; and on the other hand, if the vacuum pump malfunctions, the adsorbed building material can be effectively prevented from being released suddenly, and therefore the safety is further improved;

The mounting plate and the adsorption part are arranged at intervals, and the vacuum pump is installed on the mounting plate; on one hand, the variation transmitted to the vacuum pump can be effectively reduced, and on the other hand, the situation that rainwater gathers at the vacuum pump and consequently the vacuum pump is damaged can be avoided effectively, so that the safety is further improved;

The rainwater falling onto the protective box can be led to the mounting plate by the drainage plate, so as to further prevent the rainwater from gathering.

### BRIEF DESCRIPTION OF THE DRAWINGS

FIG. 1 is an overall structural schematic diagram of an integrated vacuum suction pad of the invention;
FIG. 2 is a first installation structural diagram of a protective box;
FIG. 3 is a second installation structural diagram of the protective box;
FIG. 4 is an internal structural diagram of a vacuum device and the protective box;
In the figures: 1. Adsorption part, 11. Set screw, 21. Vacuum pump, 22. Control valve, 23. Relay, 24. Measuring instrument, 3. Protective box, 31. Mounting frame, 311. Connecting part, 312. Mounting plate, 313. Drainage plate, 32. Protective cover, 4. Vacuum tank, 5. Mounting part, 51. Connecting strut, 52. Connecting plate, 53. Spring, 6. Filter.

### DETAILED DESCRIPTION OF THE EMBODIMENTS

The following embodiments are only used for explaining the invention, and are not intended to limit the invention; modifications made by those skilled in the art without involving inventive contribution after reading this specification are all protected by the patent law as long as the modifications fall within the scope of the claims of the invention.

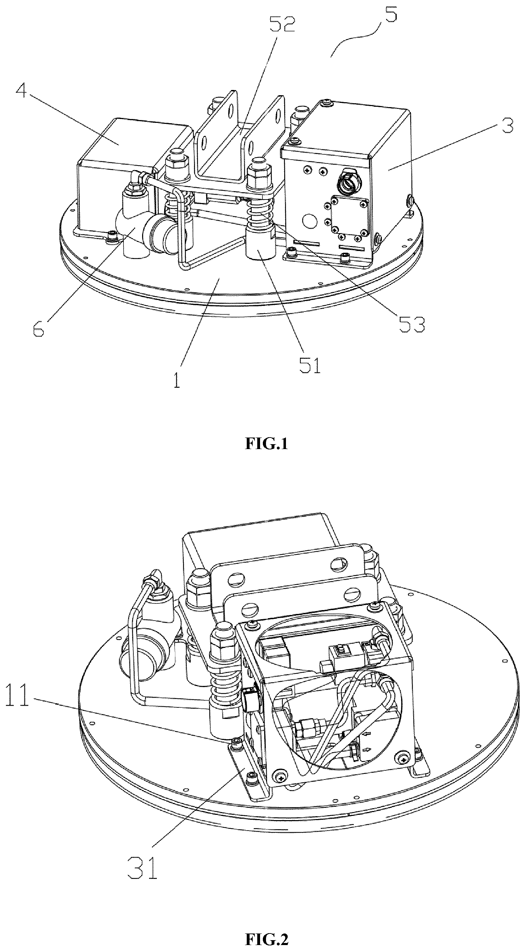

FIG. 1 illustrates an integrated vacuum suction pad of the invention, and the integrated vacuum suction pad comprises an adsorption part 1, a vacuum device, a protective box 3, a vacuum tank 4, a mounting part 5 and a filter 6; the protective box 3, the vacuum tank 4, the mounting part 5 and the filter 6 are fixedly arranged on one side of the adsorption part 1, and the vacuum device is arranged in the protective box 3, so that the vacuum device is protected by the protective box 3. The vacuum device is communicated with the vacuum tank 4, and the vacuum tank 4 is communicated with the adsorption part 1 by the filter 6; the mounting part 5 is arranged between the protective box 3 and the vacuum tank 4; and the mounting part 5 comprises connecting struts 51, a connecting plate 52 and springs 53. The four connecting struts 51 are provided, and are arranged at four top corners of a rectangle respectively. One end of each of the connecting struts 51 is fixedly connected with one side of the adsorption part 1. A U-type plate used for connecting with other components of the high-altitude installation equipment is fixedly arranged on the connecting plate 52. The four connecting struts 51 respectively penetrate through the four top corners of the connecting plate 52 and are connected with the connecting plate 52. At the moment, the connecting plate 52 is parallel to the adsorption part 1. One end of each of the springs 53 is in contact with each of the connecting struts51, and the other end of each of the springs 53 is in contact with the connecting plate 52. When the adsorption part 1 is pushed by an external force, the force born by the adsorption part 1 is transmitted to the connecting struts 51, so that the springs 53 are compressed. At the moment, the connecting struts 51 and the connecting plate 52 do relative motion, and the spacing between the adsorption part 1 and the connecting plate 52 is changed. When the external force disappears, the springs 53 stretch, so that the adsorption part 1 and the connecting plate 52 are reset.

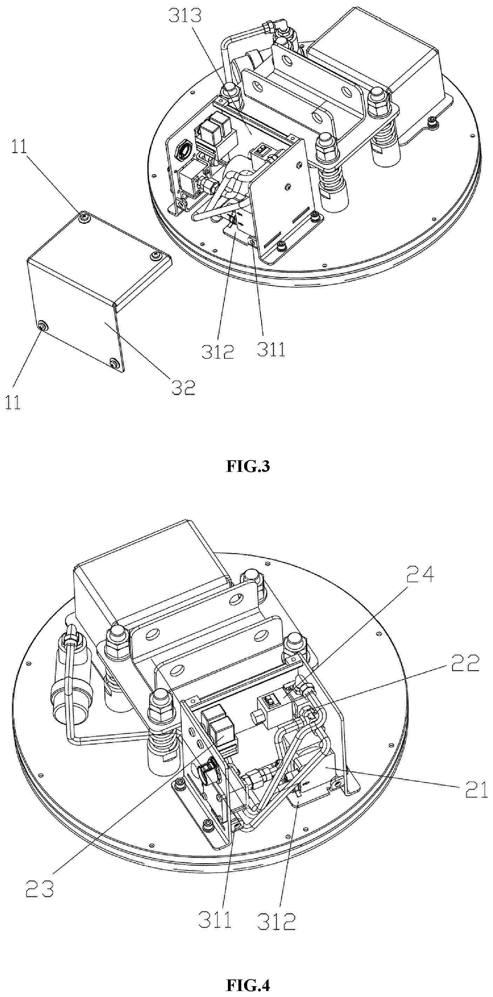

The protective box 3 comprises a mounting frame 31 and a protective cover 32, wherein the mounting frame 31 is connected with the adsorption part 1, and the protective cover 32 is connected with the mounting frame 31, so that the interior of the mounting frame 31 is in an approximately closed state. The mounting frame 31 comprises a mounting plate 312, the mounting plate 312 and the adsorption part 1 are parallel to each other, and are arranged at intervals. The mounting frame 31 further comprises a drainage plate 313, and the drainage plate 313 extends from the end, far away from the adsorption part 1, to the other end, close to the adsorption part 1, of the mounting frame 31, and is connected with the mounting plate 312. Meanwhile, the end, far away from the adsorption part 1, of the drainage plate 313 is bent, so that a gap is formed between the drainage plate and the inner wall of the protective cover 32, and thus the drainage plate and the protective cover can form an approximate groove structure jointly. Two connection modes are provided, which are between the mounting frame 31 and the adsorption part 1, and between the protective cover 32 and the mounting frame 31.The first connection mode: set screws 11 are fixedly arranged on the adsorption part 1, and the mounting frame 31 is connected with the adsorption part 1 by the set screws 11. Meanwhile, after the mounting frame 31 is connected with the adsorption part 1, the set screws 11 protrude out of a surface of the mounting frame 31. The protective cover 32 is connected with the mounting frame 31 by the set screws 11. In this connection mode, the protective box 3 can be connected with the adsorption part 1 more stably. However, the set screws 11 are liable to break, and the damaged set screws 11 easily cause that the whole protective box 3 cannot be maintained and replaced normally. The second connection mode: as shown in FIG. 3, the mounting frame 31 is directly connected with the adsorption part 1 fixedly, and connecting parts 311 through which the screws can penetrate are arranged on the mounting frame 31; and the protective cover 32 is connected with the mounting frame 31 by the connecting parts 311. As the connecting parts 311 are only used for connecting the protective cover 32 with the mounting frame 31, and the screws on the connecting parts 311 can be directly installed and removed, the replacement is easier in this connection mode when part of components are damaged. The second connection mode is preferably in this embodiment.

FIG. 4illustrates a vacuum device comprising a vacuum pump 21, a control valve 22 and a relay 23, the vacuum pump 21 is communicated with the vacuum tank 4, and the relay 23 is connected with the vacuum pump 21 and the control valve 22 electrically. The vacuum pump 21 is fixedly arranged on the mounting plate 312; as the mounting plate 312 is spaced apart from the adsorption part 1, vibration generated by other components during adsorption of the building material is effectively prevented from being transmitted to the vacuum pump 21, so that the vibration at the vacuum pump 21 is reduced, and thus a fault probability of the vacuum pump is reduced. Meanwhile, the control valve 22 and the relay 23 are installed on the side, far away from the adsorption part 1, of the vacuum pump 21, so that the vacuum device is in an approximately suspended state in the protective box 3.

Preferably, the vacuum device further comprises a measuring instrument 24 used for measuring an air pressure of the vacuum tank 4, so as to achieve automatic control over the vacuum pump 21 according to measured results; a window corresponding to the measuring instrument 24 is formed in the protective cover 32, so that maintenance personnel can read values of the measuring instrument 24 from outside for maintenance.

In practical use, a plurality of the pads of the invention can be jointly installed on the same high-altitude installation equipment by the connecting plate 52 to form an adsorption device. If the building material needs to be adsorbed, the adsorption part 1 is attached to the building material to be adsorbed. Due to influences of a mounting error, a part of the adsorption part 1 is liable to be earlier attached to the building material than the other part of the adsorption part 1 does in an alignment process. At the moment, the earlier attached part of the adsorption part 1 is subjected to a reaction force from the building material, and under the action of this reaction force, the springs 53 on the connecting struts 51 are compressed, so that the spacing between the connecting plate 52 and the adsorption part 1 is changed, and thus the other part, to be attached to the building material, of the adsorption part 1 can be attached to the building material properly. Therefore, an error-tolerant rate in practical operation is increased. After completion of attachment, the vacuum pump 21 is controlled to pump out air from the vacuum tank 4, and the adsorption part 1 is controlled by the control valve 22 to be communicated with the vacuum tank 4, so that a negative pressure in the vacuum tank 4 can be applied to the position between the adsorption part 1 and the building material, and thus the building material can be adsorbed by the adsorption part 1. Meanwhile, in the adsorption process of the adsorption part 1, the air flowing into the vacuum tank 4 from the adsorption part 1 is filtered by the filter 6 to prevent external impurities from entering the vacuum tank 4. After the adsorption part 1 is fully adsorbed onto the building material, external air cannot enter the vacuum tank 4, so that the vacuum tank 4 can be kept in a negative pressure state for a certain duration. At the moment, the vacuum pump 21 can be controlled to stop working. Therefore, by taking advantage of the vacuum tank 4, on one hand, the working time of the vacuum pump 21 can be reduced effectively, so as to reduce the fault probability of the vacuum pump 21 and prolong the service life of the vacuum pump 21; and on the other hand, if the vacuum pump 21 stops working due to a fault, the vacuum tank 4 can still maintain the adsorption state of the adsorption part 1 to prevent the adsorption part 1 from being separated from the building material suddenly, so that the safety is improved. When the building material needs to be released, the adsorption part 1 can be communicated with the atmosphere by the control valve 22, and therefore the negative pressure between the adsorption part 1 and the building material can be fractured without reverse inflation for the vacuum tank 4, so that the adsorption part 1 can be separated from the building material properly. Therefore, the control valve 22 can be used for fast switching the pressure state between the adsorption part 1 and the building material, on one hand, the working efficiency is improved, and on the other hand, the control sensitivity is improved.

In conclusion, the pads of the invention are capable of completing adsorption and release operations independently. In an actual state, when some of the pads are damaged, the working states of the rest pads are not affected. On one hand, the adsorbed building material in the working process can be effectively prevented from being released suddenly, and therefore the safety in work of the high-altitude installation equipment is effectively improved; and on the other hand, the damaged pad can be maintained and replaced independently, so that the maintenance cost is reduced greatly, and the maintenance process is simplified.

Meanwhile, in case of working in a rainy season, when rainwater falls onto the adsorption part 1, the rainwater will flow out of the protective box 3 through the gap between the mounting plate 312 and the adsorption part 1, and therefore the situation that the rainwater gathers in the protective box 3 and consequently the vacuum device is damaged is effectively avoided. The rainwater directly falling onto the protective box 3 is led by the drainage plate 313, and flows to the mounting plate 312 through the groove structure formed by the drainage plate 313 and the protective cover 32 jointly, and finally flows out of the protective box 3 through the gap between the mounting plate 312 and the adsorption part 1. Thus, the vacuum device can be effectively protected from soaking in external liquid by the protective box 3, so that the damage probability of the vacuum device is reduced, and the overall safety is improved.

The above descriptions are only implementations of the invention, but the protection scope of the invention is not limited thereto; any easily-thinkable equivalent modifications or substitutions made by those skilled in the art within the technical scope disclosed by the invention shall fall within the protection scope of the invention. Therefore, the protection scope of the invention shall follow the protection scope of the claims.

## Claims

1. An integrated vacuum suction pad, **characterized by** comprising an adsorption part (1) and a vacuum device; the vacuum device is fixedly arranged on one side of the adsorption part (1), and comprises a vacuum pump (21), a control valve (22) and a relay (23); the vacuum pump (21) is used for pumping out air between the adsorption part (1) and an object to be adsorbed, and the control valve (22) is used for controlling the adsorption part (1) to be communicated with atmosphere or the vacuum pump (21); and the relay (23) is used for powering on the vacuum pump (21) and the control valve (22);
the integrated vacuum suction pad further comprises a protective box (3), and the protective box (3) is fixedly arranged on one side of the adsorption part (1); the vacuum device is arranged in the protective box (3); **characterised in that** the protective box (3) comprises a mounting frame (31) and a protective cover (32), and the protective cover (32) is connected with the mounting frame (31);
the mounting frame (31) comprises a mounting plate (312), the mounting plate (312) and the adsorption part (1) are arranged at intervals, and the vacuum pump (21) is arranged on the mounting plate (312);
the mounting frame (31) further comprises a drainage plate (313), and the drainage plate (313) extends from one end of the mounting frame (31) to the other end, close to the adsorption part (1), of the mounting frame.

2. The integrated vacuum suction pad according to claim 1, **characterized in that** set screws (11) are fixedly arranged on the adsorption part (1), the mounting frame (31) is connected with the adsorption part (1) by a first part of the set screws (11), and the protective cover (32) is connected with the mounting frame (31) by a second part of the set screws (11).

3. The integrated vacuum suction pad according to claim 1, **characterized in that** the mounting frame (31) is fixedly connected with the adsorption part (1), and connecting parts (311) through which the screws can penetrate are arranged on the mounting frame (31); and the protective cover (32) is connected with the mounting frame (31) by the connecting parts (311)..

4. The integrated vacuum suction pad according to claim 1, **characterized in that** the end, far away from the adsorption part (1), of the drainage plate (313) is bent, so that a gap is formed between the drainage plate and the inner wall of the protective cover (32).

5. The integrated vacuum suction pad according to claim 1, **characterized by** further comprising a vacuum tank (4), and the vacuum tank (4) is fixedly arranged on one side of the adsorption part (1); the vacuum tank (4) is communicated with the vacuum pump (21), and the adsorption part (1) can be controlled by the control valve (22) to be communicated with the vacuum tank (4) or the atmosphere.

6. The integrated vacuum suction pad according to claim 1, **characterized by** further comprising a mounting part (5), and the mounting part (5) comprises connecting struts (51) and a connecting plate (52); and the connecting struts (51) are connected with the adsorption part (1), and the connecting struts (51) penetrate through the connecting plate (52).

7. The integrated vacuum suction pad according to claim 6, **characterized by** further comprising springs (53), one end of each of the springs (53) is in contact with each of the connecting struts (51), and the other end of each of the springs (53) is in contact with the connecting plate (52).

## Patentansprüche

1. Ein integriertes Vakuumsaugkissen , **gekennzeichnet durch** ein Adsorptionsteil (1) und eine Vakuumvorrichtung; die Vakuumvorrichtung ist fest an einer Seite des Adsorptionsteils (1) angeordnet und umfasst eine Vakuumpumpe (21), ein Steuerventil (22) und ein Relais (23); die Vakuumpumpe (21) dient zum Absaugen der Luft zwischen dem Adsorptionsteil (1) und einem zu adsorbierenden Objekt, und das Steuerventil (22) dient zur Steuerung der Verbindung des Adsorptionsteils (1) mit der Atmosphäre oder der Vakuumpumpe (21); und das Relais (23) dient zum Einschalten der Vakuumpumpe (21) und des Steuerventils (22);
Das integrierte Vakuumsaugkissen umfasst ferner einen Schutzkasten (3), der fest auf einer Seite des Adsorptionsteils (1) angeordnet ist; der Schutzkasten (3) umfasst einen Montagerahmen (31) und eine Schutzabdeckung (32), wobei die Schutzabdeckung (32) mit dem Montagerahmen (31) verbunden ist; und die Vakuumvorrichtung ist im Schutzkasten (3) angeordnet;
Der Montagerahmen (31) umfasst eine Montageplatte (312), die Montageplatte (312) und das Adsorptionsteil (1) sind in Abständen angeordnet, und die Vakuumpumpe (21) ist auf der Montageplatte (312) angeordnet;
Der Montagerahmen (31) umfasst ferner eine Ablaufplatte (313), die sich von einem Ende des Montagerahmens (31) bis zum anderen Ende nahe dem Adsorptionsteil (1) des Montagerahmens erstreckt.

2. Das integrierte Vakuumsaugkissen nach Anspruch 1, **dadurch gekennzeichnet, dass** Stellschrauben (11) fest auf dem Adsorptionsteil (1) angeordnet sind, der Montagerahmen (31) mit dem Adsorptionsteil (1) mittels a first part of der Stellschrauben (11) verbunden ist und die Schutzabdeckung (32) mit dem Montagerahmen (31) mittels a second part of der Stellschrauben (11) verbunden ist.

3. Das integrierte Vakuumsaugkissen nach Anspruch 1, **dadurch gekennzeichnet, dass** der Montagerahmen (31) fest mit dem Adsorptionsteil (1) verbunden ist und auf dem Montagerahmen (31) Verbindungsteile (311) angeordnet sind, durch die die Schrauben hindurchgeführt werden können; und die Schutzabdeckung (32) mittels der Verbindungsteile (311) mit dem Montagerahmen (31) verbunden ist.

4. Das integrierte Vakuumsaugfuß nach Anspruch 1, **dadurch gekennzeichnet, dass** das vom Adsorptionsteil (1) entfernte Ende der Ablaufplatte (313) so gebogen ist, dass ein Spalt zwischen der Ablaufplatte und der Innenwand der Schutzabdeckung (32) entsteht.

5. Das integrierte Vakuumsaugkissen nach Anspruch 1, zeichnet sich ferner dadurch aus, dass es einen Vakuumbehälter (4) umfasst, wobei der Vakuumbehälter (4) fest auf einer Seite des Adsorptionsteils (1) angeordnet ist; der Vakuumbehälter (4) ist mit der Vakuumpumpe (21) verbunden, und der Adsorptionsteil (1) kann mittels des Steuerventils (22) so gesteuert werden, dass er mit dem Vakuumbehälter (4) oder der Atmosphäre in Verbindung steht.

6. Das integrierte Vakuumsaugkissen nach Anspruch 1, **dadurch gekennzeichnet, dass** es ferner ein Montageteil (5) umfasst, wobei das Montageteil (5) Verbindungsstreben (51) und eine Verbindungsplatte (52) aufweist; und die Verbindungsstreben (51) mit dem Adsorptionsteil (1) verbunden sind und die Verbindungsstreben (51) durch die Verbindungsplatte (52) hindurchgehen.

7. Das integrierte Vakuumsaugfuß nach Anspruch 6, der ferner Federn (53) umfasst, wobei jeweils ein Ende jeder Feder (53) mit einer der Verbindungsstreben (51) in Kontakt steht und das andere Ende jeder Feder (53) mit der Verbindungsplatte (52) in Kontakt steht.

## Revendications

1. Un coussinet à ventouses intégré, caractérisé en comprenant une partie d'adsorption (1) et un dispositif de vide; le dispositif de vide est fixé d'un côté de la partie d'adsorption (1) et comprend une pompe à vide (21), une vanne de régulation (22) et un relais (23); la pompe à vide (21) est utilisée pour pomper l'air entre la partie d'adsorption (1) et un objet à adsorber, et la vanne de régulation (22) est utilisée pour commander la communication de la partie d'adsorption (1) avec l'atmosphère ou la pompe à vide (21); et le relais (23) est utilisé pour alimenter la pompe à vide (21) et la vanne de régulation (22);
le coussinet d'aspiration sous vide intégré comprend en outre un boîtier de protection (3), et le boîtier de protection (3) est disposé de manière fixe sur un côté de la partie d'adsorption (1); le boîtier de protection (3) comprend un cadre de montage (31) et un couvercle de protection (32), et le couvercle de protection (32) est relié au cadre de montage (31); et le dispositif de vide est disposé dans le boîtier de protection (3);
le cadre de montage (31) comprend une plaque de montage (312), la plaque de montage (312) et la partie d'adsorption (1) sont disposées à intervalles réguliers, et la pompe à vide (21) est disposée sur la plaque de montage (312);
le cadre de montage (31) comprend en outre une plaque de drainage (313), et la plaque de drainage (313) s'étend d'une extrémité du cadre de montage (31) à l'autre extrémité, près de la partie d'adsorption (1), du cadre de montage.

2. Le coussinet à ventouse intégré selon la revendication 1, **caractérisé en ce que** des vis de réglage (11) sont disposées de manière fixe sur la partie d'adsorption (1), le cadre de montage (31) est relié à la partie d'adsorption (1) par a first part of les vis de réglage (11), et le couvercle de protection (32) est relié au cadre de montage (31) par a second part of les vis de réglage (11).

3. Le coussinet à ventouse intégré selon la revendication 1, **caractérisé en ce que** le cadre de montage (31) est relié de manière fixe à la partie d'adsorption (1), et que des pièces de connexion (311) à travers lesquelles les vis peuvent pénétrer sont disposées sur le cadre de montage (31); et que le couvercle de protection (32) est relié au cadre de montage (31) par les pièces de connexion (311).

4. Le coussinet à ventouse intégré selon la revendication 1, **caractérisé en ce que** l'extrémité, loin de la partie d'adsorption (1), de la plaque de drainage (313) est pliée, de sorte qu'un espace se forme entre la plaque de drainage et la paroi intérieure du couvercle de protection (32).

5. Le coussinet à ventouse intégré selon la revendication 1, caractérisé en comprenant en outre un réservoir à vide (4), et le réservoir à vide (4) est disposé de manière fixe d'un côté de la partie d'adsorption (1); le réservoir à vide (4) communique avec la pompe à vide (21), et la partie d'adsorption (1) peut être commandée par la vanne de régulation (22) pour communiquer avec le réservoir à vide (4) ou l'atmosphère.

6. Le coussinet à ventouse intégré selon la revendication 1, **caractérisé en outre par** la présence d'une partie de montage (5), et la partie de montage (5) comprend des entretoises de liaison (51) et une plaque de liaison (52); et les entretoises de liaison (51) sont reliées à la partie d'adsorption (1), et les entretoises de liaison (51) pénètrent à travers la plaque de liaison (52).

7. Le coussinet à ventouse intégré selon la revendication 6, caractérisé en comprenant en outre des ressorts (53), une extrémité de chacun des ressorts (53) étant en contact avec chacune des entretoises de liaison (51), et l'autre extrémité de chacun des ressorts (53) étant en contact avec la plaque de liaison (52).
